# EUROPÄISCHE PATENTANMELDUNG

(11) **EP 0 790 276 A2**
(43) Veröffentlichungstag der Anmeldung: **20.08.1997**
(21) Anmeldenummer: 97101676.1
(22) Anmeldetag: 04.02.1997
(51) Int. Cl.: C08J 9/40

(54) **Verfahren zur Herstellung von flächigen Polyurethan-Formteilen**

(30) Priorität: 14.02.1996 DE 19605347
(71) Anmelder: BASF AKTIENGESELLSCHAFT, 67056 Ludwigshafen (DE)
(72) Erfinder: Scherzer, Dietrich, Dr., 67433 Neustadt (DE); Bruchmann, Bernd, Dr., 67251 Freinsheim (DE); Illguth, Rolf, 67069 Ludwigshafen (DE); Jung, Ludwig, 82291 Mammendorf (DE)

(57) **Zusammenfassung**

Gegenstand der Erfindung ist ein Verfahren zur Herstellung von flächigen Polyurethanformkörpern durch Imprägnierung von porösen Flächengebilden mit einem Polyurethansystem und anschließender Umsetzung des Polyurethansystems in einer Form, dadurch gekennzeichnet, daß, das poröse Flächengebilde zunächst mit einer Polyurethan-Komponente vollständig imprägniert wird, danach mit der anderen Polyurethan-Komponente vollständig imprägniert wird und danach in einer beheizten Form durch Umsetzung der Polyurethan-Komponenten das Formteil hergestellt wird.

## Beschreibung

Die Erfindung betrifft ein Verfahren zur Herstellung von flächigen Polyurethan-Formteilen durch Imprägnierung von porösen, flächigen Materialien mit Polyurethan-Systemen und anschließende Umsetzung der Polyurethan-Systeme zu Polyurethanen.

Flächige Polyurethan-Formteile werden insbesondere für Innenverkleidungen von Fahrzeugen verwendet. Ihre Herstellung kann durch Imprägnierung von porösen, flächigen Materialien mit Polyurethansystemen und die nachfolgende Umsetzung dieser Systeme zu Polyurethanen erfolgen. Es können als Polyurethansysteme auch Isocyanate, beispielsweise in Form von Dispersionen, oder auch Isocyanatgruppen enthaltende Prepolymere eingesetzt werden, deren Isocyanatgruppen mit Wasser, wobei gegebenenfalls die Luftfeuchtigkeit und/oder die in den porösen, flächigen Materialien enthaltende Feuchtigkeit ausreichend ist, umgesetzt werden. Üblicherweise werden die porösen, flächigen Materialien zuerst in die Form eingebracht und dort mit dem vorgemischten Polyurethansystem durchtränkt.

Als poröse, flächige Materialien können hierbei synthetische Schaumstoffe, wie Polyurethan-Weich- oder Halbhartschäume, oder Gewebe, wie Glaswatte oder Gewebe aus natürlichen Fasern, wie Filze oder Matten aus Pflanzenfasern, verwendet werden.

Zur Formgebung und zur Beschleunigung der Umsetzung werden die flächigen Gebilde nach dem Imprägnieren zumeist in eine beheizte Form gegeben. Bei diesem Arbeitsgang können die Formteile auch mit Kaschiermaterialien wie Folien oder Matten versehen werden. Dabei entstehen Formteile mit Sandwichstruktur.

Die bekannten Verfahren zur Herstellung von flächigen Polyurethan-Formteilen weisen Nachteile auf. Bei Verwendung von gelösten Isocyanaten kommt es zu einer Freisetzung von Lösungsmitteln. Zur Behebung dieses Mangels wird in EP-A-276 465 vorgeschlagen, wäßrige Isocyanat-Suspensionen zum Tränken der porösen Materialien zu verwenden. Bei diesem Verfahren kommt es jedoch zu relativ langen Entformzeiten, da das Verdampfen des Wassers viel Zeit benötigt.

Bei der Verwendung von Polyurethan-Systemen zur Herstellung von flächigen Formteilen ist es erforderlich, daß die Systeme eine hinreichend lange Topfzeit aufweisen, um ein Aufschäumen vor der vollständigen Imprägnierung des porösen Materials zu vermeiden. Das kann zum Beispiel durch reversible Blockierung der funktionellen Gruppen der Systemkomponenten erreicht werden. Nachteilig ist hierbei jedoch, daß das freigesetzte Blockierungsmittel nach der Polyurethanbildungsreaktion im Faserteil verbleiben kann. Außerdem ist die Viskosität solcher Polyurethansysteme zumeist sehr hoch. Dadurch kann es insbesondere bei Verwendung von flächigen Materialien auf Basis von Pflanzenfasern zu einer unvollständigen Imprägnierung der Polyurethansysteme kommen. Beim Durchtränken der Materialien in der Form kommt es zu Fließproblemen.

Aufgabe der Erfindung war es, ein einfaches und kostengünstiges Verfahren zur Herstellung von flächigen Polyurethan-Formteilen zu entwickeln, das die Nachteile des Standes der Technik vermeidet.

Die Aufgabe konnte überraschenderweise gelöst werden durch ein Verfahren zur Herstellung von flächigen Polyurethan-Formteilen durch Imprägnierung von porösen Flächengebilden mit einem Polyurethan-System und anschließender Umsetzung in einer Form, indem das poröse Flächengebilde zunächst mit einer Polyurethan-Komponente vollständig imprägniert wird, danach mit der anderen Polyurethan-Komponente vollständig imprägniert wird und anschließend in einer beheizten Form durch Umsetzung der Polyurethan-Komponenten das Formteil hergestellt wird. Die Imprägnierung der porösen Flächengebilde kann mittels Rollen oder Walzen erfolgen. Vorzugsweise werden Kalander, die mit einer Temperiereinrichtung versehen sind, verwendet.

Gegenstand der Erfindung ist demzufolge ein Verfahren zur Herstellung von flächigen Polyurethan-Formteilen durch Imprägnierung von porösen Flächengebilden mit einem Polyurethan-System und anschließender Umsetzung in einer Form, dadurch gekennzeichnet, daß das poröse Flächengebilde zunächst mit einer Polyurethan-Komponente vollständig imprägniert wird, danach mit der anderen Polyurethan-Komponente vollständig imprägniert wird und anschließend in eine beheizte Form gegeben wird.

Die flächigen Polyurethan-Formteile können mit Deckschichten, sogenannten Kaschierungen, versehen werden. Üblicherweise geschieht das, indem die Kaschierungen vor dem Einbringen der imprägnierten Flächengebilde in die Form eingelegt werden. Es ist auch möglich, das flächige, poröse Formgebilde nur teilweise zu imprägnieren oder eine imprägnierte Schicht zusammen mit nicht imprägnierten Schichten in die Form einzubringen.

Zu den Ausgangsprodukten des erfindungsgemäßen Verfahrens ist im einzelnen folgendes zu sagen:

Als poröse Flächengebilde können sowohl synthetische Produkte als auch Naturstoffe verwendet werden. Bei den synthetischen Produkten haben weiche und halbharte Schaumstoffe besondere Bedeutung. Um eine ausreichende Imprägnierung zu gewährleisten, ist ein hoher Gehalt an offenen Zellen erforderlich. Diese Anforderungen werden insbesondere von Polyurethan-Schaumstoffen erfüllt.

Weiterhin können als poröse Flächengebilde Glasfasermatten eingesetzt werden. Diese haben den Vorteil, daß sie sich auf Grund ihres geringen Fließwiderstandes besonders leicht imprägnieren lassen. Üblicherweise eingesetzte Glasfasermatten haben ein Flächengewicht von etwa 500 g/m2.

In letzter Zeit haben Flächengebilde aus natürlichen Fasern stark an Bedeutung gewonnen. Insbesondere Matten aus Pflanzenfasern, wie Flachs, Sisal oder Jute können vorteilhaft eingesetzt werden. Bei Verwendung derartiger Produkte ist das erfindungsgemäße Verfahren besonders vorteilhaft gegenüber denen des Standes der Technik, da diese Matten einen hohen Fließwiderstand gegenüber den Polyurethan-Komponenten aufweisen. Dadurch kommt es bei Verwendung von Polyurethansystemen oft dazu, daß das Polyurethansystem die Matten vor der Reaktion nicht vollständig durchdringen kann und die erhaltenen Formteile Inhomogenitäten aufweisen.

Die Flächengewichte solcher Naturfaser- oder Recyclingfasermatten liegen üblicherweise zwischen 300 g/m² und 1600 m².

Zu den Polyurethan-Komponenten ist im einzelnen folgendes zu sagen:

Als organische Polyisocyanate kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus RohMDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoryethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.

Besonders bewährt haben sich als organische Polyisocyanate und kommen daher vorzugsweise zur Anwendung: Mischungen aus Toluylendiisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethan-diisocyanat-Isomerengehalt von 30 bis 80 Gew.-%, vorzugsweise von 30 bis 55 Gew.-%.

Als höhermolekulare Verbindungen mit mindestens zwei reaktiven Wasserstoffatomen werden zweckmäßigerweise solche mit einer Funktionalität von 2 bis 8, vorzugsweise 2 bis 6 und einem Molekulargewicht von 500 bis 9.000 verwendet. Bewährt haben sich z.B. Polyether-polyamine und/oder vorzugsweise Polyole ausgewählt aus der Gruppe der Polyether-polyole, Polyester-polyole, Polythioether-polyole, hydroxylgruppenhaltigen Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono- und -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Alkandiole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Zur Herstellung foggingarmer PU-Formkörper werden die Polyesterpolyole vor ihrer Verwendung zweckmäßigerweise einer Destillation bei Temperaturen von 140 bis 280°C und unter vermindertem Druck von 0,05 bis 30 mbar, z.B. einer Dünnschichtdestillation, zur Abtrennung flüchtiger Bestandteile unterworfen.

Die erhaltenen Polyester-polyole besitzen vorzugsweise eine Funktionalität von 2 bis 4, insbesondere 2 bis 3 und ein Molekulargewicht von 500 bis 3.000, vorzugsweise 1.200 bis 3.000 und insbesondere 1.800 bis 2.500.

Die verwendeten Polyether-polyole werden nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle für die verwendeten Polyetheralkohole kommen folgende Verbindungen in Betracht:

Es werden insbesondere hydroxylgruppenhaltige hochfunktionelle Verbindungen, beispielsweise Rizinusöl, insbesondere Zucker, Stärke oder Lignin als Startsubstanzen verwendet. Von besonderer praktischer Bedeutung sind hierbei Glucose, Sucrose und Sorbitol. Da diese Verbindungen bei den üblichen Reaktionsbedingungen der Alkoxylierung in fester Form vorliegen, ist es allgemein üblich, diese Verbindungen gemeinsam mit Koinitiatoren zu alkoxylieren. Als Koinitiatoren eignen sich besonders Wasser und mehrfunktionelle niedere Alkohole, z.B. Glyzerin, Ethylenglykol, Propylenglykol und deren niedere Homologe.

Es werden insbesondere Ammoniak, mehrfunktionelle aliphatische Amine, insbesondere solche mit 2 bis 6 Kohlenstoffatomen und primären und sekundären Aminogruppen sowie Aminoalkohole mit 2 bis 6 Kohlenstoffatomen in der Hauptkette eingesetzt.

Vorzugsweise eingesetzt werden Ethylendiamin, Monoalkylethylendiamine, 1,3-Propylendiamin sowie verschiedene Butylen- und Hexamethylendiamine; und als Aminoalkohole Ethanolamin, Diethanolamin und Triethanolamin.

Als Startsubstanzen werden Wasser und/oder niedermolekulare zwei- und/oder dreifunktionelle Alkohole eingesetzt. Verwendet werden insbesondere lineare oder verzweigte Alkohole, vorzugsweise solche mit 2 bis 6 Kohlenstoffatomen in der Hauptkette.

Bevorzugt als Startsubstanzen eingesetzte Verbindungen sind neben Wasser Ethylenglykol, Propylenglykol, Diethylenglykol, Dipropylenglykol, Butandiol-1,4, Hexandiol-1,5, Glyzerin und Trimethylpropan.

Als Alkylenoxide werden niedere Alkylenoxide, insbesondere solche mit bis zu 4 Kohlenstoffatomen, verwendet. Von besonderer technischer Bedeutung sind das Ethylenoxid und das 1,2-Propylenoxid.

Die Herstellung der verwendeten Polyetheralkohole erfolgt zumeist nach dem anionischen Reaktionsmechanismus. Dazu wird die Startsubstanz zunächst mit einem basischen Katalysator versetzt. Als basische Katalysatoren werden zumeist Alkali- oder Erdalkalimetallhydroxide und -carbonate, insbesondere Kaliumhydroxid, verwendet.

Die Anlagerung der Alkylenoxide erfolgt üblicherweise bei Temperaturen von 80 bis 130°C und Drücken von 0,1 bis 1,0 MPa. Nach der Anlagerung der Alkylenoxide erfolgt die Neutralisation des basischen Katalysators und die Aufarbeitung des Polyetheralkohols durch Entfernung der Feststoffe, zumeist durch Filtration, und Entfernung der leichtflüchtigen Bestandteile, zumeist durch Vakuumdestillation, um die thermische Beanspruchung des Polyetheralkohols gering zu halten.

Zur Modifizierung der mechanischen Eigenschaften, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxcyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Es können auch hydroxylgruppenhaltige Naturstoffe, wie Rizinusöl, Tallöl und Polyole aus Fettsäuren als Polyolkomponenten verwendet werden.

Sofern zur Herstellung der Polyurethane Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyolverbindung, zum Einsatz.

Als Treibmittel für die verwendeten Polyurethan-Systeme können die zur Herstellung von Polyurethanschaumstoffen üblichen Treibmittel eingesetzt werden, beispielsweise halogenierte Alkane.

Vorteilhafterweise werden als physikalische Treibmittel niedrigsiedende aliphatische Kohlenwasserstoffe, vorzugsweise Cyclopentan, n-Pentan und/oder iso-Pentan, insbesondere n-Pentan verwendet.

Da die als Treibmittel geeigneten aliphatischen Kohlenwasserstoffe brennbar und explosibel sind, müssen die Anlagen mit den entsprechenden Sicherheitseinrichtungen ausgestattet sein.

Es ist vorteilhaft, die aliphatischen Kohlenwasserstoffe gemeinsam mit Wasser als Treibmittel einzusetzen. Die eingesetzte Menge an aliphatischen Kohlenwasserstoffen beträgt 2 bis 25 Gew.-%, vorzugsweise 10 bis 13 Gew.-%, bezogen auf die Polyolkomponente. Der Anteil des Wassers richtet sich nach den angestrebten Eigenschaften des Polyurethans.

Als Katalysatoren zur Herstellung der Polyurethane werden insbesondere Verbindungen verwendet, die die Reaktion der reaktive Wasserstoffatome, insbesondere Hydroxylgruppen, enthaltenden Verbindungen und gegebenenfalls mit den organischen, gegebenenfalls modifizierten Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bicyclo-(2,2,2)-octan, und Alkanolaminverbindungen, wie Triethanolamin,Triisopropanolamin, N-Methyl- und N-Ethyl-diethanolamin und Dimethylethanolamin.

Die basischen Amine werden allein oder in Kombination mit Metallsalzen oder anderen katalytisch wirksamen Verbindungen eingesetzt. Häufig werden die basischen Amine auch durch Zusatz einer Säurekomponente blockiert, um ein verzögertes Anspringen der PU-Reaktion zu erreichen.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Polyolkomponente.

Dem Polyurethansystem können gegebenenfalls auch noch Hilfsmittel und/oder Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.

Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.

Üblicherweise erfolgt jedoch bei den erfindungsgemäß verwendeten Polyurethanen kein Zusatz von Flammschutzmitteln, physikalischen Treibmitteln, Katalysatoren und sonstigen Hilfsmitteln.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 3. Auflage, 1993 zu entnehmen.

Zur Durchführung des erfindungsgemäßen Verfahrens ist es vorteilhaft, das poröse Flächengebilde zunächst mit der Polyolkomponente und danach mit der Isocyanatkomponente des Polyurethansystems zu imprägnieren. Dadurch wird vermieden, daß es zu einem vorzeitigen Abreagieren der Isocyanatkomponente mit eventuell vorhandener Feuchtigkeit der Matte kommt, zum anderen durchdringt die Isocyanatkomponente auf Grund ihrer geringen Viskosität die bereits imprägnierte Matte leichter, als es umgekehrt der Fall wäre.

Das Imprägnieren kann sowohl manuell, beispielsweise mit Bürsten oder Handrollen, als auch maschinell, beispielsweise durch Aufsprühen oder mit Kalandern, erfolgen.

Es ist besonders vorteilhaft, die Schäume oder Matten als Rollenware einzusetzen und kontinuierlich mit Hilfe zweier Walzenstühle zuerst mit der Polyol- und dann mit der Isocyanatkomponente zu imprägnieren. Nach dem Imprägnieren wird die Matte abgelängt und in die beheizte Form eingebracht.

Nach dem Imprägnieren werden die Flächengebilde in beheizbare Formen gegeben. Dort erfolgt die Polyurethanreaktion. Die Temperatur in den Formen beträgt 80 - 150°C, vorzugsweise 90 - 135°C. Das poröse Flächengebilde kann sowohl vor als auch nach dem Imprägnieren zum Verformen zugeschnitten werden. Zur besseren Entformbarkeit wird mit Trennmitteln gearbeitet. Hierbei können sowohl innere Trennmittel verwendet oder die Form vor Einführung des Flächengebildes mit Trennmittel besprüht werden.

Es ist auch möglich und für viele Anwendungen üblich, die flächigen Polyurethan-Formteile mit Kaschierungen zu versehen. Als Kaschierungen werden beispielsweise offen- und geschlossenzellige Schäume, Fasermatten, Stoffe, Kunststoff folien und ähnliche Materialien verwendet. Die Kaschierungen können auf einer Seite oder auf beiden Seiten der flächigen Polyurethan-Formkörper aufgebracht werden. Die Kaschierung wird üblicherweise aufgebracht, indem zunächst das Kaschiermaterial und danach das imprägnierte flächige Material in die Form gegeben und danach unter Erhitzen das Polyurethan gebildet wird. Dabei erfolgt eine Verbindung des Kaschiermaterials und die Herausbildung einer Sandwich-Struktur. Hierbei kann, insbesondere bei Verwendung von Folien als Kaschiermaterial, gegebenenfalls auf den Einsatz von Trennmitteln verzichtet werden.

Die durch das erfindungsgemäße Verfahren hergestellten flächigen Formteile zeichnen sich durch einen homogenen Aufbau, gute Festigkeiten und eine gleichmäßige Oberfläche aus. Überraschenderweise kam es zu keiner Aufschäumung des Polyurethansystems vor der Formgebung. Bei der Verwendung von Kaschiermaterial erfolgt eine feste Anbindung der äußeren Schichten.

Die Erfindung soll an nachstehenden Beispielen näher erläutert werden:

### Beispiel 1 (Vergleich)

In ein beheiztes Prüfplattenwerkzeug der Größe 500x200x4 mm wurde eine Matte aus Flachs/Sisal 1:1 mit einem Flächengewicht von 1000 g/m², die mit 300 g einer wäßrigen Suspension von Roh-MDI mit einem NCO-Gehalt von 15 % imprägniert war, eingelegt. Danach wurde die Form auf 110°C beheizt. Nach 15 Minuten war der größte Teil des Wassers verdampft. Nach weiteren 5 Minuten konnte die Form geöffnet und das Formteil entnommen werden.

### Beispiel 2 (Vergleich)

Es wurde verfahren wie in Beispiel 1, nur daß auf dem Boden des Formwerkzeuges eine Glasfasermatte mit einem Flächengewicht von 450 g/m² eingelegt war. Auch hier war erst nach 15 Minuten der größte Teil des Wassers verdampft, und nach weiteren 5 Minuten konnte das Formteil entnommen werden.

### Beispiel 3 (Vergleich)

In das in Beispiel 1 beschriebene, auf 40°C beheizte Werkzeug wurde eine Matte aus Flachs/Sisal 1:1 mit einem Flächengewicht von 1000 g/m² eingelegt. Auf die Matte wurden 150 g eines vorgemischten Polyurethan-Halbhartschaumsystems aus 75 g eines mit Sucrose gestarteten Polyetheralkohols mit einer Hydroxylzahl von 403 mg KOH/g (Lupranol® 3321) und 75 g eines Roh-MDI mit einem NCO-Gehalt von 31 Gew.-% (Lupranat® M20W), mit einer Dichte des Polyurethans von 300 g/l, einer Startzeit von 25 Sekunden und einer Steigzeit von 100 Sekunden gegeben und das Werkzeug geschlossen. Das Polyurethanschaumsystem war nicht in der gesamten Form verteilt.

### Beispiel 4

Die in den Vergleichsbeispielen beschriebene Matte aus Flachs/Sisal wurde mittels einer Handrolle mit 75 g eines mit Sucrose gestarteten Polyetherols mit einer Hydroxylzahl von 403 mg KOH/g (Lupranol® 3321 der BASF AG) imprägniert. Danach wurde die Matte ebenso mit 75 g Roh-MDI (Lupranat® M2OW) mit einem NCO-Gehalt von 31 Gew.-% imprägniert und danach in die in den Vergleichsbeispielen beschriebene, auf 100°C erhitzte Form eingebracht. Nach 4 Minuten schäumte das System auf. Nach 10 Minuten konnte das Formteil entnommen werden. Das Formteil hatte eine hohe Festigkeit und eine sehr glatte Oberfläche, einen Biege E-Modul von 1275 N/mm² und eine Dichte von 740 g/l.

### Beispiel 5

Es wurde verfahren wie in Beispiel 4, nur daß an Stelle des Polyetherols eine Mischung aus 43 g eines ringgeöffneten epoxidierten Pflanzenölpolyols mit einer Hydroxylzahl von 250 mg KoH/g, 29 g Rizinusöl und 27 g eines glyceringestarteten Polyetherols mit einer Hydroxylzahl von 550 mg KoH/g verwendet wurde. Auch hier besaß das Formteil eine hohe Festigkeit, eine sehr glatte Oberfläche, einen Biege E-Modul von 1507 N/mm² und eine Dichte von 740 g/l.

### Beispiel 6

Es wurde verfahren wie in Beispiel 4, nur daß in den Deckel der Form eine PVC-Folie und in den Boden der Form eine Glasfasermatte mit einem Flächengewicht von 450 g/m² eingelegt war. Das erhaltene Sandwich-Element hatte eine sehr gute Festigkeit. Die beiden äußeren Deckschichten waren fest angebunden.

### Beispiel 7

Es wurde verfahren wie in Beispiel 6, nur daß vor dem Einbringen in die Form unter die imprägnierte Matte die Glasfasermatte und auf die imprägnierte Matte die PVC-Folie gelegt wurden und das so erhaltene Sandwich-Teil in die Form eingebracht wurde. Das erhaltene Sandwich-Element hatte eine sehr gute Festigkeit. Die beiden äußeren Schichten waren fest angebunden.

### Beispiel 8

Eine Matte aus Flachs mit einem Flächengewicht von 450 g/m² wurde wie in Beispiel 4 beschrieben zunächst mit 180 g Rizinusöl und danach mit 75 g Roh-MDI Lupranat® M2OW imprägniert. Danach wurde auf und unter die imprägnierte Matte je eine Sisalmatte gelegt und in die beschriebene, auf 100°C erwärmte Form eingebracht. Dort schäumte das Polyurethan-System in der Flachsmatte nach 4 Minuten auf und durchdrang die Sisalmatten vollständig. Nach 10 Minuten wurde das Teil entformt. Das Formteil hatte eine gute Festigkeit, eine sehr glatte Oberfläche, einen Biege E-Modul von 1275 N/mm² und eine Dichte von 721 g/l.

## Patentansprüche

1. Verfahren zur Herstellung von flächigen Polyurethanformkörpern durch Imprägnierung von porösen Flächengebilden mit einem Polyurethansystem und anschließender Umsetzung des Polyurethansystems in einer Form, dadurch gekennzeichnet, daß das poröse Flächengebilde zunächst mit einer Polyurethan-Komponente vollständig imprägniert wird, danach mit der anderen Polyurethan-Komponente vollständig imprägniert wird und danach in einer beheizten Form durch Umsetzung der Polyurethan-Komponenten das Formteil hergestellt wird.

2. Verfahren nach Anspruch 1, dadurch gekennzeichnet, daß das poröse Flächengebilde aus mehreren Schichten besteht, von denen nicht alle imprägniert werden.

3. Verfahren nach Anspruch 1 und 2, dadurch gekennzeichnet, daß die Polyurethanformkörper durch Deckschichten kaschiert werden können.
